# EUROPÄISCHE PATENTSCHRIFT

(11) **EP 0 989 058 B1**
(45) Veröffentlichungstag und Bekanntmachung des Hinweises auf die Patenterteilung: **29.12.2004**
(21) Anmeldenummer: 99117246.1
(22) Anmeldetag: 02.09.1999
(51) Int. Cl.: B64D 37/00, F16K 17/40

(54) **Selbstdichtendes Entlüftungsventil für Hubschrauber-Tankanlagen**
Self-sealing venting valve for a helicopter tank
Soupape de purge à fermeture automatique pour un réservoir d'hélicoptère

(30) Priorität: 26.09.1998 DE 19844264
(43) Veröffentlichungstag der Anmeldung: 29.03.2000
(73) Patentinhaber: Eurocopter Deutschland GmbH, 86609 Donauwörth (DE)
(72) Erfinder: Gross, Arnold, 85570 Markt-Schwaben (DE); Hanke, Rolf, 84539 Ampfing (DE)
(74) Vertreter: Baum, Wolfgang, Dipl.-Ing.

(56) Entgegenhaltungen:
- US-A- 3 026 070
- US-A- 5 067 690
- US-A- 5 791 366

## Beschreibung

### TECHNISCHES GEBIET

Die Erfindung betrifft eine Hubschrauber-Tankanlage mit einem selbstdichtenden Entlüftungsventil.

### STAND DER TECHNIK

Aufgrund gegebener Bauvorschriften sind die Verbindungen zwischen einer Hubschrauberzelle und einem Kraftstoff-Tank für den Fall, bei dem vorbestimmte Kräfte an der Verbindungsstelle überschritten werden, sicher auszulegen. Das bedeutet, dass diese Verbindungen in diesen Fällen entweder dicht bleiben müssen oder beim Abreißen der Verbindungen ein Abdichten des Tanks erfolgen muss, um ein Ausströmen von Kraftstoff aus dem Tank zu verhindern. Die im Stand der Technik vorgesehenen Abreißkupplungen, die eine ähnliche Funktion erfüllen, umfassen üblicherweise ein Dichtelement, das mit Hilfe einer Feder auf einen Dichtflansch geschoben wird, wenn die Kupplung auseinander gerissen wird. Da diese Abreißkupplungen in Form einer Schlauch-Kupplung gestaltet sind, haben sie den Nachteil, dass sie relativ viel Platz benötigen, was speziell bei Hubschrauber-Anwendungen ungünstig ist. Insbesondere ist es mit den Schlauch-Kupplungen nach dem Stand der Technik nicht möglich, diese in geeigneter Weise in Kombination mit einer Entlüftungseinrichtung für den Tank vorzusehen, die an oberster Stelle des Tanks angeordnet werden muss, um ein Volltanken desselben zu erlauben.

Aus der US-A-5 791 366 ist eine Schnellverschluss-Kupplung zum Verbinden von zwei Fluid-Kanälen bekannt. Die Kupplung besitzt zwei miteinander verbindbare und wieder trennbare Kupplungshälften und einen ventilartigen Schließmechanismus mit konischen Schließkörpern, die an ihrem Umfang mit einem Dichtungselement versehen sind. Die Schließkörper werden bei einem Trennen der Kupplungshälften mittels einer Feder in eine abdichtende Stellung bewegt; in der die jeweiligen Dichtungselemente an einer Dichtfläche der jeweiligen Kupplungshälfte anliegen. Dadurch wird verhindert, dass das Fluid aus der betreffenden Kupplungshälfte austritt bzw. in die andere Kupplungshälfte gelangt.

Die US-P-3 026 070 offenbart eine Luftfahrzeug-Tankanlage, bei der im Crash-Fall ein Teil eines außerhalb eines Tank-Behälters angebrachten und fest mit diesem verbundenen Tankeinsatzes selbst an einer Sollbruchstelle in zwei Teile getrennt wird, wobei ein Teil am Tank-Behälter verbleibt und das andere abreißt. Der Tankeinsatz wird hierbei also zerstört. Die Zerstörung führt dazu, dass ein axial beweglicher stiftförmiger Abstandshalter, der einen Ventilkörper trägt und im Normalzustand (kein Crash) eine Ventilöffnung offen hält, indem er sich gegen einen Bereich des abtrennbaren Teils des Tankeinsatzes abstützt, freigegeben wird. Infolge dieser Freigabe führt der Stift zusammen mit dem Ventilkörper eine axiale Schließbewegung aus, wodurch sich der Ventilkörper gegen den Rand einer Tankbehälter-Öffnung legt und die Öffnung verschließt. Durch eine am stiftförmigen Abstandshalter vorgesehene weitere Sollbruchstelle wird im Crash-Fall ferner sichergestellt, dass ein unteres Ende des stiftförmigen Abstandshalters abbricht, so dass der am Tank-Behälter verbleibende Teil des abgetrennten Tankeinsatzes nicht durch Ziehen am Stiftende vom Tank-Behälter abgerissen werden kann.

### DARSTELLUNG DER ERFINDUNG

Aufgabe der Erfindung ist es, eine Hubschrauber-Tankanlagen mit einem selbstdichtenden Entlüftungsventil zu schaffen, das die bestehenden Sicherheitsanforderungen erfüllt und gleichzeitig wenig Raum benötigt sowie keine Beeinträchtigung üblicher Entlüftungsventile darstellt.

Diese Aufgabe wird durch eine erfindungsgemäße Hubschrauber-Tankanlage mit den Merkmalen des Anspruchs 1 gelöst. Weitere Ausführungsformen sind in den Unteransprüchen angegeben.

Im Folgenden wird die Erfindung anhand der Figuren beschrieben.

### KURZE BESCHREIBUNG DER ZEICHNUNGEN

Es zeigen:
- Figur 1: einen Querschnitt durch ein Entlüftungsventil einer erfindungsgemäßen Hubschrauber-Tankanlage im normalen Betrieb eines Hubschraubers, und
- Figur 2: einen Querschnitt durch eine Ausführungsform des Entlüftungsventils von Figur 1, wobei sich das Entlüftungsventil nach Überschreiten von vorbestimmten Kräften in einem gesicherten Zustand befindet.

### BESCHREIBUNG EINES BEVORZUGTEN AUSFÜHRUNGSBEISPIELS

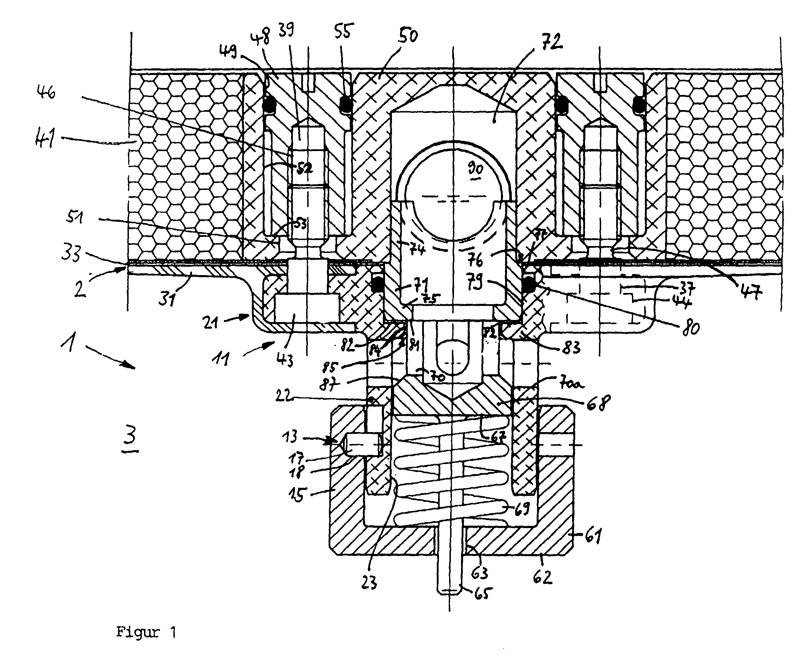

Das in der Figur 1 dargestellte Entlüftungsventil 1 oder die KupplungsVorrichtung einer erfindungsgemäßen Hubschrauber-Tankanlage ist an der Innenseite eines Tank-Behälters 2, der einen Tank-Innenraum 3 umschließt, angebracht und weist einen vorzugsweise rotationssymmetrischen Ventilkörper 11 auf, an dessen freiem Ende über einen Bajonettverschluss 13 eine Bajonetthülse 15 angebracht ist. Der Bajonettverschluss 13 ist vorzugsweise in Form eines Raststifts 17 gestaltet, der in einer entsprechenden, im Bereich der Bajonetthülse 15 und dem Ventilkörper 11 verlaufenden Führung 18 geführt wird.

Der Ventilkörper 11 umfasst einen ersten oder oberen Teil 21, der die Form eines Flansches hat, und einen zweiten oder unteren Teil 22, der die Form eines Hohlzylinders mit einer Bohrung 23 hat und in dem die Führung 18 für den Raststift 17 des Bajonettverschlusses 13 vorgesehen ist. Der gesamte Ventilkörper 11 ist rotationssymmetrisch ausgebildet, wobei der obere Teil 21 und der untere Teil 22 vorzugsweise die selben Symmetrieachsen haben. Der obere Teil 21 des Ventilkörpers 11 wird im Wesentlichen von einem Anschlussstutzen 31 eingegrenzt bzw. gehalten, der Teil der Tank-Außenkontur 33 des Tank-Behälters 2 ist oder an dieser angebracht ist. Der Ventilkörper 11 weist zumindest eine Bohrung 37 auf, durch die sich ein Teil eines Bolzens 39 erstreckt. Der zumindest eine Bolzen 39 verbindet den Ventilkörper 11 und somit die Tank-Außenkontur 33 mit einem Fußboden oder einer Wand 41 der Hubschrauber-Zelle. Hierzu ist der Kopf 43 des Bolzens 39 in einer Ausnehmung 44 gelegen, die sich an die Bohrung 37 anschließt und in dem Bereich des Ventilkörpers 11 liegt, welcher von der Wand 41 entfernt ist. Der 'Bolzen 39 weist einen Gewindezapfen 46 sowie eine Querschnittsverengung oder Sollbruchstelle 47 auf, wobei letztere zwischen dem Gewindezapfen 46 und dem Kopf 43 des Bolzens 39 gelegen ist. Ferner ragt der Gewindezapfen 46 in eine Gewindehülse 48, die in einer entsprechenden Bohrung 49 in der Wand 41 vorgesehen ist.

Die zumindest eine Bohrung 49 ist in einer alternativen Ausführungsform nicht direkt in der Wand 41 angeordnet, sondern in einem entsprechenden Einsatz 50, der formschlüssig an geeigneter Stelle in der Wand 41 eingebracht und mit dieser verbunden ist. In dem Fall, dass mehrere Bolzen 39 mit den entsprechenden Bohrungen 49 mit Gewindehülsen 48 vorgesehen sind, sind diese vorzugsweise auf einer Kreislinie verteilt angeordnet.

Die Bohrung 49 weist an ihrem der Tank-Außenkontur 33 zugewandten Ende einen Bereich 51 auf, der einen geringeren Durchmesser hat als ein Bereich 52, in dem die Gewindehülse 48 gelegen ist, da der Bereich 51 nur von dem dem Kopf 43 des Bolzens 39 nahe gelegenen Teil des Schafts des Bolzens 39 durchragt wird. In dem Übergang zwischen dem Bereich 51 mit dem geringerem Querschnitt zu dem Bereich 52 mit dem größeren Querschnitt ist eine Anlagefläche 53 ausgebildet, an der die Gewindehülse 48 zur Anlage kommt, wenn der Bolzen 39 festgeschraubt ist. Die Anlagefläche 53 der Bohrung 49 und die Ausnehmung 44 im Ventilkörper 11 bewirken im Zusammenspiel mit dem Bolzen 39, dass in dessen festgeschraubter Stellung die Gewindehülse 48 und der Ventilkörper 11 gegenseitig zusammengehalten werden. Dadurch ist der Ventilkörper 11 am Fußboden oder der Wand 41 befestigt.

Zur Abdichtung der Zylinderfläche der Gewindehülse 48 gegen die Wandung der Bohrung 49 im Bereich 52 ist ein O-Ring 55 vorgesehen.

Die Bajonetthülse 15 weist einen zylindrischen Teil 61 und einen Boden 62 auf, wobei der zylindrische Teil 61 teilweise den unteren oder zylindrischen Teil 22 des Ventilkörpers 11 überlappt. Der Boden 62, der sich an dem dem Ventilkörper 11 fernliegenden Ende der Bajonetthülse 15 befindet, weist eine Bohrung 63 auf, durch die ein Stift 65 in Richtung der Rotationsachse der Bajonetthülse 15 bzw. des Ventilkörpers 11 längsverschieblich hindurchragt. Der Stift 65 ist an dem dem Boden 62 zugewandten Ende oder einer Stirnfläche 67 eines Dichtkegels 68 zentrisch angebracht. Der Dichtkegel 68 ist rotationssymmetrisch ausgebildet und konzentrisch zum Ventilkörper 11 angeordnet. Der Ventilkörper 11 verläuft längsverschieblich im unteren Teil 22 des Ventilkörpers 11, d. h. er wird von der zylindrischen Innenfläche desselben geführt. An dem unteren Ende des Dichtkegels 68, d.h. an der Stirnfläche 67, liegt das eine Ende einer Spiralfeder 69 an, deren anderes Ende an der dem Dichtkegel 68 zugewandten Seite des Bodens 62 der Bajonetthülse 15 anliegt.

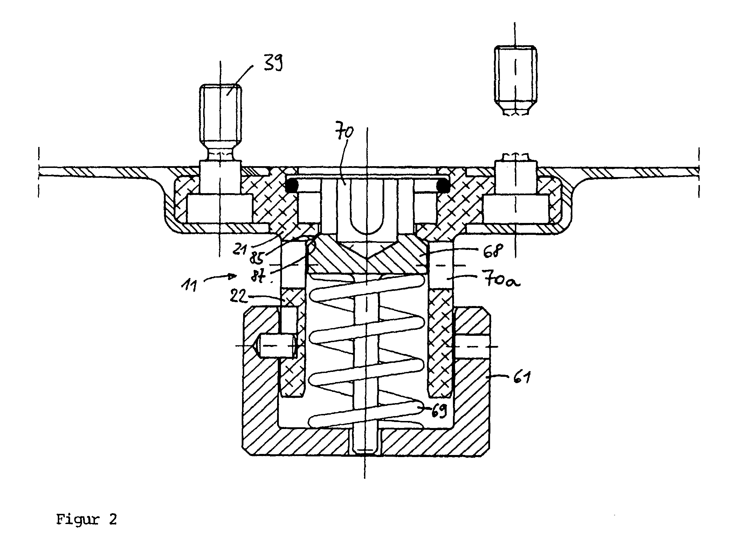

In der in der Figur 2 gezeigten geöffneten Stellung des Entlüftungsventils 1 ragt der Stift 65 zu einem Teil aus der Bajonetthülse 15 heraus. Dadurch kann bei der Montage des Entlüftungsventils 1 manuell oder durch visuelle Wahrnehmung die geöffnete Stellung des Entlüftungs-Ventils 1 festgestellt werden.

Entgegengesetzt zu der Seite des Dichtkegels 68, von dem aus der andere Stift 65 verläuft, erstreckt sich ein zylindrischer Stutzen 70, der einer Hülse 71 zugewandt ist. Der Dichtkegel 68 und der Stutzen 70 sind axial im unteren Teil 22 des Ventilkörpers 11 angeordnet. In der zylindrischen Wand des unteren Teils 22 des Ventilkörpers 11 ist zumindest eine Bohrung 70a vorgesehen. In der in der Figur 1 gezeigten Stellung des Dichtkegels 68 befindet sich die Bohrung 70a in axialer Richtung des Ventilkörpers 11 gesehen zwischen dem Dichtkegel 68 und der Hülse 71, so dass Fluid oder Flüssigkeit aus dem Tank-Innenraum 3 in die Bohrung 72 und von dort in eine Rohrleitung 90 und den Ausgleichsbehälter (nicht gezeigt) gelangen kann.

Im Ausgangszustand ist die Hülse 71 mit einem oberen Teil 74 in einer in dem Einsatz 50 gelegenen Bohrung 72 und mit einem dem Ventilkörper 11 zugewandten unteren Teil 75 im Bereich des oberen Teils 21 des Ventilkörpers 11 gelegen. Die Bohrung 72 erstreckt sich in dem Einsatz 50 in der von dem Ventilkörper 11 weg gerichteten Richtung über das Ende der Hülse 71 hinaus, und zwar ungefähr über eine Strecke, die dem halben bis ganzen Durchmesser der Hülse 71 entspricht. In diesem sich über die Hülse 71 hinaus erstreckenden Bereich ist der Anfang der Rohrleitung 90 gelegen, die zu einem nicht dargestellten Ausgleichsbehälter führt.

Der Teil 75 weist einen größeren Außendurchmesser auf, als der Teil 74, so dass an der entsprechenden Ütaergangsstelle zwischen diesen Teilen ein Anschlag 76 ausgebildet ist, der an dem Bereich der Unterseite 77 des Einsatzes 50 anliegt, der sich nahe der Öffnung der Bohrung 72 des Einsatzes 50 befindet. Durch den Anschlag 76 ist die Bewegung der Hülse 71 in der Richtung zu dessen Längsachse, d.h. in Richtung zum Teil 50 festgelegt. Der obere Teil 74 der Hülse 71 ist fest mit dem Einsatz 50 verbunden. Dadurch ist die beschriebene relative Lage der Hülse 71 zum Teil 50 sowohl für den Ausgangszustand, d.h. den Normalbetrieb, als auch für den Sicherungsfall festgelegt. Die Hülse 71 ist an ihren freien Enden offen, so dass in dem in der Figur 1 gezeigten Zustand des Entlüftungsventils 1 Flüssigkeit von dem unteren Teil 22 des Ventilkörpers 11 in die Bohrung 72 fließen kann.

Der untere Teil 75 der Hülse 71 ist in einer Bohrung 79 des Ventilkörpers 11 gelegen, wobei die zylindrische Außenseite des Teils 75 gegen die Innenwand der Bohrung 79 des Ventilkörpers 11 mittels eines O-Rings 80 abgedichtet ist. Die Bohrung 79 befindet sich im oberen Teil 21 des Ventilkörpers 11 und ist zum zylindrischen unteren Teil 22 des Ventilkörpers 11 ausgerichtet. Die Hülse 71 weist an derjenigen Stirnfläche ihres unteren Teils 75, die dem Dichtkegel 68 zugewandt ist, eine entlang ihrer Umfangslinie verlaufende Anlagefläche 81 auf, die sich unmittelbar neben einer dieser zugewandten Anlagefläche 82 eines Übergangs des Ventilkörpers 11 befindet, der die Form einer am Innenumfang des Ventilkörpers 11 umlaufenden Stufe oder eines Rings 83 besitzt.

Diese umlaufende Stufe oder dieser umlaufende Ring 83 des Ventilkörpers 11 ist zwischen dessen oberen Teil 21 und dessen unteren Teil 22 angeordnet und stellt eine ringförmige Abgrenzung der Bohrung 79 des Ventilkörpers 11, in welcher der untere Teil 75 der Hülse 71 gelegen ist, von der Bohrung 23 des rohrförmigen unteren Teils 22 des Ventilkörpers 11 dar. Die umlaufende Stufe 83 mit der Anlagefläche 82 des Ventilkörpers schließt die Möglichkeit aus, dass sich die Hülse 71 über eine vorbestimmte Stellung hinaus aus dem Ventilkörper 11 in Richtung zum Tank-Innenraum 3 bewegt. Dabei besteht ein geringer Abstand zwischen der Anlagefläche 81 der Hülse 71 von der dieser zugewandten Anlagefläche 82 der Stufe 83, da die axiale Lage des Ventilkörpers 11 zur Tank-Außenkontur 33 im Normalzustand durch den Anschlussstutzen 31 und/oder die entsprechende Außenseite des Einsatzes 50 festgelegt ist, so dass eine Überbestimmtheit der Lagerung des Ventilkörpers 11 vermieden wird. Die Bohrung 79, deren Innenfläche an der Außenseite des Teils 75 der Hülse 71 anliegt, dient vorzugsweise der radialen Führung des Ventilkörpers 11.

Das freie Ende des Stutzens 70 liegt in der Ausgangsstellung des Dichtkegels 68 an der Anlagefläche 81 der Hülse 71 an. Durch die axiale Länge des Stutzens 70 ist in der Ausgangsstellung gemäß Figur 1 die axiale Lage des Dichtkegels 68 im unteren Teil 22 des Ventilkörpers 11 festgelegt. In dieser Stellung ist die Feder 69, die in Richtung zur Hülse 71 auf den Dichtkegel 68 drückt, in vorbestimmter Weise vorgespannt. Würde sich die Anlagefläche 81 der Hülse 71 axial im Ventilkörper 11 oder über diesen hinaus bewegen, würden sich unter der Wirkung der Feder 69 der Dichtkegel 68 und der Stutzen 70 innerhalb des oberen Teils des Ventilkörpers 11 in Richtung zum oberen Teil 21 des Ventilkörpers 11 verschieben.

Die Stufe 83 bildet einen Teil des Übergangs des Ventilkörpers 11 von dessen oberen Teil 21 zu dessen unteren Teil 22, wobei die Stufe 83 das am oberen Teil 21 gelegene und der Hülse 71 zugewandte Ende des Übergangs darstellt. An demjenigen Ende des Übergangs, das den Übergang mit dem unteren Teil 22 des Ventilkörpers 11 verbindet oder diesem zugewandt ist, ist eine Anschrägung oder Dichtfläche 85 vorgesehen, die winklig zur Rotationsachse des Ventilkörpers bzw. zur Innenzylinderfläche 84 der Stufe 83 bzw. der Innenseite der Bohrung 23 des unteren Teils 22 verläuft. Diese winklig verlaufende Dichtfläche 85 verläuft parallel und radial gesehen im gleichen Bereich wie eine Dichtfläche 87 des Dichtkegels 68, der zum einen längsverschieblich im Ventilkörper 11 gelegen ist und zum anderen kraftschlüssig mit der Hülse 71 verbunden ist.

In axialer Richtung gesehen ist die Bohrung 70a auf der Seite der Dichtfläche 85 gelegen, die sich jenseits der Bohrung 72 befindet. Daher schließt der Dichtkegel 68 in seiner gesicherter Stellung in dem unteren Teil 22 des Ventilkörpers 11 (Figur 2) durch das Anliegen des Dichtkegels 68 an der Dichtfläche 85 den oberen Teil 21 des Ventilkörpers 11 gegen die im Tank-Innenraum 3 befindliche Flüssigkeit oder das Fluid ab. Über die zumindest eine Bohrung 70a in das Innere des unteren Teils 22 des Ventilkörpers 11 eintretende Flüssigkeit oder eintretendes Fluid ist folglich durch den Dichtkegel 68 von dem Inneren des oberen Teils 22 des Ventilkörpers 11 abgegrenzt.

Nachfolgend wird anhand der Figuren 1 und 2 die Funktionsweise des Entlüftungsventils 1 der erfindungsgemäßen Hubschrauber-Tankanlage beschrieben.

Die Figur 1 zeigt das Entlüftungsventil 1 im Normalzustand, d.h. in einem Zustand, in dem noch kein Auslösungsereignis eingetreten ist.

In der Stellung gemäß Figur 1 ist die Feder 69 vorgespannt und drückt somit die Bajonetthülse 15 und den über den Bajonettverschluss 13 mit dieser verbundenen Ventilkörper 11 zum einen und den Dichtkegel 68 mit der Hülse 71 zum anderen in entgegengesetzter axialer Richtung auseinander. In dieser Stellung ist also das gesamte Entlüftungsventil 1 in sich vorgespannt in dem Einsatz 50 der Hubschrauberzelle befestigt.

Ein kritisches Ereignis, gegen welches das Entlüftungsventil 1 die geforderte Sicherungsfunktion zu erfüllen hat, besteht darin, dass die Tank-Außenkontur 33 aufgrund äußerer Einwirkung von der Wand 41 und insbesondere von dem Einsatz 50 gelöst wird. Dieser Zustand, der in der Figur 2 gezeigt ist, kommt dadurch zustande, dass sämtliche Bolzen 39 aufgrund der auftretenden Kräfte an ihrer.Sollbruchstelle 47 brechen. Für den Fall, dass mehrere Bolzen 39 vorgesehen sind und nicht sämtliche Bolzen 39, sondern z.B. nur ein Bolzen 39 bricht, bleibt der Ventilkörper 11 am Einsatz 50 angeordnet. Da sich in dieser Situation der Ventilkörper 11 leicht gegenüber dem Einsatz 50 lockert und verdreht, ist der O-Ring 80 vorgesehen, der auch in dieser Situation eine Abdichtung zwischen dem Ventilkörper 11 und der Hülse 71 gewährleistet.

In dem Fall, dass sämtliche Bolzen 39 brechen, wird der Kraftfluss, der im Ausgangszustand vom Einsatz 50, über die Hülse 71, den Dichtkegel 68, die Feder 69, die Bajonetthülse 15, den Bajonettverschluss 13, den Ventilkörper 11 und über den Bolzen 39 wieder zum Teil 50 verläuft (Figur 1), durchbrochen. Durch den Bruch des zumindest einen Bolzens 39 wird der Ventilkörper 11 von der Hülse 71 weg bewegt, so dass der untere Teil 75 der Hülse 71 nicht mehr in der Bohrung 79 des Ventilkörpers 11 gelagert ist. Die Feder 69 drückt dabei den Dichtkegel 68 und die Bajonetthülse 15 auseinander. Dadurch wird der Dichtkegel 68 im unteren oder zylindrischen Teil 22 des Ventilkörpers 11 von der Bajonetthülse 15 weg bewegt. Im Verlauf seiner Längsverschiebung innerhalb des unteren Teils 22 des Ventilkörpers 11 wird der Dichtkegel 68 soweit in Richtung des Übergangs 83 des Ventilkörpers 11 bewegt, bis die Dichtfläche 87 des Dichtkegels 68 und die Dichtfläche 85 des Übergangs 83 aneinander zur Anlage kommen. Die Dichtflächen 85 und 87 sind parallel zueinander und derart ausgebildet, dass sie eine Abdichtung gegenüber den im Tank-Innenraum 3 befindlichen Kraftstoff bewirken, wenn sie gegenseitig zur Anlage kommen. Dieser Zustand ist in der Figur 2 gezeigt.

Bei einer auftretenden Trennung der Tank-Außenkontur 33 von der Wand 41 der Hubschrauberzelle drückt also die Feder 69 den Dichtkegel 68 in dem Tank-Innenraum 3 in abdichtender Weise gegen die Hülse 71, so dass aus dem Tank-Innenraum 3 kein Kraftstoff entweicht.

### Bezugszeichenliste

**Es bezeichnen:**
- 1: Entlüftungsventil
- 2: Tank-Behälter
- 3: Tank-Innenraum 3

- 11: Ventilkörper 11
- 12: -
- 13: Bajonettverschluss
- 14: -
- 15: Bajonetthülse
- 16: -
- 17: Raststift
- 18: Führung

- 21: Erster, oberer Teil von 11
- 22: Zweiter, unterer Teil von 1
- 23: Bohrung

- 31: Anschlussstutzen
- 32: -
- 33: Tank-Außenkontur 33
- 34: -
- 35: -
- 36: -
- 37: Bohrung in 11
- 38: -
- 39: Bolzen

- 40: -
- 41: Fußboden oder Wand 41 der Hubschrauber-Zelle
- 42: -
- 43: Kopf von 39
- 44: Ausnehmung
- 45: -
- 46: Gewindezapfen von 39
- 47: Sollbruchstelle von 39
- 48: Gewindehülse
- 49: Bohrung in 41

- 50: Einsatz in 41
- 51: Bereich von 49 mit geringem Durchmesser
- 52: Bereich von 49 mit größerem Durchmesser
- 53: Anlagefläche
- 54: -
- 55: O-Ring

- 61: Zylindrischer Teil von 15
- 62: Boden von 15
- 63: Bohrung in 62
- 64: -
- 65: Stift
- 66: -
- 67: Stirnfläche von 68
- 68: Dichtkegel
- 69: Spiralfeder

- 70: Stutzen
- 70a: Bohrung in 22
- 71: Hülse
- 72: Bohrung in 50
- 73: -
- 74: Oberer Teil von 71, mit kleinerem Außendurchmesser
- 75: Unterer Teil von 71, mit größerem Außendurchmesser
- 76: Anschlag
- 77: Unterseite von 50
- 78: -
- 79: Bohrung in 11

- 80: O-Ring
- 81: Anlagefläche

- 82: Anlagefläche
- 83: Umlaufende Stufe / Ring
- 84: Innenzylinderfläche von 83
- 85: Dichtfläche

- 86: -
- 87: Dichtfläche von 68

- 90: Rohrleitung

## Patentansprüche

1. Hubschrauber-Tankanlage mit einem Tank-Behälter (2), der einen Tank-Innenraum (3) und einen Ausgang besitzt, einem Ausgleichsbehälter, einem einer Hubschrauberzelle zugeordneten Einsatz (50), einer zumindest einen Bolzen (39) mit Sollbruchstelle (47) aufweisenden Verbindung zwischen dem Einsatz (50) und dem Tank-Behälter (2), und einem Entlüftungsventil (1) zur Abdichtung des Ausgangs beim Lösen der Verbindung; das Entlüftungsventil (1) umfassend:
einen Ventilkörper (11) mit einem an einer Tank-Außenkontur (33) des Tank-Behälters (2) anliegenden und von dem Einsatz (50) trennbaren, ersten Teil (21) und einem dem Tank-Innenraum (3) des Tank-Behälters (2) zugewandten zylinderförmigen zweiten Teil (22),
eine Hülse (71), die in eine in dem Einsatz (50) vorgesehene, zu einem Ausgleichsbehälter führende Bohrung (72) zum Teil hineinragt und in dieser befestigt ist und zum Teil in den ersten Teil (21) des Ventilkörpers (11) hineinragt,
einen axial längsverschieblich im zweiten Teil (22) des Ventilkörpers (11) angeordneten und gegen eine Anlagefläche (81) der Hülse (71) mittels einer Feder (69) vorgespannten Dichtkegel (68) mit Stutzen (70), die (68, 70) zusammen in ihrer vorgespannten Stellung einen Durchfluss von Fluid vom Tank-Innenraum (3) des Tank-Behälters (2) über den zweiten Teil (22) und von dort in die Hülse (71) erlauben, wobei der Dichtkegel (68) bei einem Bruch der Sollbruchstelle (47) sämtlicher Bolzen (39) und bei einer Trennung des Einsatzes (50) und des ersten Teils (21) unter der Wirkung der Feder (69) in eine abdichtende Stellung bewegt wird, in der er (68) an einer zwischen dem ersten Teil (21) und dem zweiten Teil (22) des Ventilkörpers (11) befindlichen Dichtfläche (85) anliegt und in der kein Fluid vom zweiten Teil (22) in den ersten Teil (21) gelangt.

2. Hubschrauber-Tankanlage nach Anspruch 1,
**dadurch gekennzeichnet, dass**
der Dichtkegel (68) eine Dichtfläche (87) aufweist, die in der abdichtenden Stellung zur Anlage mit der Dichtfläche (85) kommt.

3. Hubschrauber-Tankanlage nach Anspruch 1 oder 2,
**dadurch gekennzeichnet, dass**
der erste, obere Teil (21) des Ventilkörpers (11) von einem Anschlussstutzen (31) zumindest teilweise umgrenzt und zusammen mit dem zumindest einen Bolzen (39) an der Tank-Außenkontur (33) befestigt ist.

4. Hubschrauber-Tankanlage nach einem der voranstehenden Ansprüche,
**dadurch gekennzeichnet, dass**
die Feder (69) mit ihrem einen Ende am Inneren einer Bajonetthülse (15), die mittels eines Bajonettverschlusses (13) an dem freien Ende des zweiten Teil (22) des Ventilkörpers (11) angebracht ist, und mit ihrem anderen Ende an der der Bajonetthülse (15) zugewandten Seite des Dichtkegels (68) gelagert ist.

5. Hubschrauber-Tankanlage nach einem der voranstehenden Ansprüche,
**dadurch gekennzeichnet, dass**
in der Bajonetthülse (15) ein Stift (65) angeordnet ist, der zum Teil aus der Bajonetthülse (15) herausragt, wenn das Entlüftungsventil (1) in einer geöffneten Stellung ist.

## Claims

1. Helicopter tank with a tank container (2), which has a tank interior (3) and an outlet, an expansion tank, an insert (50) associated with a helicopter airframe, a connection between the insert (50) and the tank container (2) comprising at least one bolt (39) with a predetermined breaking point (47) and a venting valve (1) to seal the outlet when the connection is released; the venting valve (1) comprising:
a valve body (11) with a first part (21) adjacent to a tank outer contour (33) of the tank container (2) and separable from the insert (50) and a cylinder-shaped second part (22) facing the tank interior (3) of the tank container (2),
a sleeve (71) which partially protrudes into a bore (72) provided in the insert (50), leading to an expansion tank, and which is fastened in the bore and partially protrudes into the first part (21) of the valve body (11),
an axially longitudinally displaceable sealing cone (68) with a boss (70) arranged in the second part (22) of the valve body (11) and biased against a mating surface (81) of the sleeve (71) by means of a spring (69), which (68, 70) in their biased position together allow a flow of fluid from the tank interior (3) of the tank container (2) via the second part (22) and from there into the sleeve (71), the sealing cone (68) being moved under the effect of the spring (69) when all bolts (39) break at the predetermined breaking point (47) and when the insert (50) and the first part (21) are separated, into a sealing position in which it (68) bears against a sealing surface (85) located between the first part (21) and the second part (22) of the valve body (11) and in which no fluid from the second part (22) reaches the first part (21).

2. Helicopter tank according to claim 1,
**characterised in that**
the sealing cone (68) comprises a sealing surface (87) which in the sealing position comes into contact with the sealing surface (85).

3. Helicopter tank according to claim 1 or 2,
**characterised in that** the first, upper part (21) of the valve body (11) is enclosed at least partially by a pipe connection (31) and together with the at least one bolt (39) is fastened to the tank outer contour (33).

4. Helicopter tank according to any one of the preceding claims,
**characterised in that**
the spring (69) is mounted with its one end at the inside of a bayonet sleeve (15) which is attached to the free end of the second part (22) of the valve body (11) by means of a bayonet lock (13) and with its other end on the side of the sealing cone (68) facing the bayonet sleeve (15).

5. Helicopter tank according to any one of the preceding claims,
**characterised in that**
a pin (65) is arranged in the bayonet sleeve (15) which partially protrudes out of the bayonet sleeve (15) when the venting valve (1) is in the opened position.

## Revendications

1. Système de réservoir d'hélicoptère comprenant :
- un réservoir (2) muni d'un intérieur de réservoir (3) et d'une sortie,
- un réservoir de compensation,
- un insert (50) associé à une cabine d'hélicoptère,
- une liaison, comportant au moins un axe (39) muni d'un point destiné à la rupture, entre l'insertion (50) et le réservoir (2), et
- une soupape de purge (1) destinée à rendre étanche la sortie lorsque la liaison est supprimée,
**caractérisé en ce que**
la soupape de purge (1) comprend :
- un corps de soupape (11) muni d'une première partie (21) appliquée à un contour extérieur (33) du réservoir (2) et séparable de l'insert (50) et d'une deuxième partie (22) cylindrique tournée vers l'intérieur de réservoir (3) du réservoir (2),
- un manchon (71) qui dépasse en partie dans un perçage (72) prévu dans l'insert (50) et menant à un réservoir de compensation et qui est fixé à l'intérieur de celui-ci et dépasse en partie dans la première partie (21) du corps de soupape (11),
- une bague biconique (68), disposée de façon à se déplacer axialement en longueur dans la deuxième partie (22) du corps de soupape (11) et précontrainte contre une surface de contact (81) du manchon (71) à l'aide d'un ressort (69), munie d'embouts (70) qui (68, 70) dans leur position précontrainte permettent conjointement que du fluide s'écoule de l'intérieur (3) du réservoir (2) à travers la deuxième partie (22) et de là dans le manchon (71),
- lorsque le point destiné à la rupture (47) de tous les axes (39) se brise et lorsque l'insert (50) se sépare de la première partie (21), la bague biconique (68) se déplace sous l'effet du ressort (69) dans une position qui assure l'étanchéité et dans laquelle elle (68) s'applique contre une surface d'étanchéité (85) située entre la première partie (21) et la deuxième partie (22) du corps de soupape (II) et dans laquelle aucun fluide ne passe de la deuxième partie (22) dans la première partie (21).

2. Système de réservoir d'hélicoptère selon la revendication 1,
**caractérisé en ce que**
la bague biconique (68) présente une surface d'étanchéité (87) qui, en position étanche, est en contact avec la surface d'étanchéité (85).

3. Système de réservoir d'hélicoptère selon la revendication 1 ou 2,
**caractérisé en ce que**
la première partie (21), supérieure, du corps de soupape (11) est au moins en partie délimitée par un raccord (31) et est fixée au contour extérieur du réservoir (33) conjointement avec l'au moins un l'axe (39).

4. Système de réservoir d'hélicoptère selon l'une des revendications précédentes,
**caractérisé en ce que**
par l'une de ses extrémités le ressort (69) est monté à l'intérieur d'un manchon à baïonnette (15) qui est appliqué à l'aide d'un emboîtement à baïonnette (13) à l'extrémité libre de la deuxième partie (22) du corps de soupape (11) et par son autre extrémité sur le côté - de la bague biconique (68) - tourné vers la manchon à baïonnette (15).

5. Système de réservoir d'hélicoptère selon l'une des revendications précédentes,
**caractérisé en ce que**
le manchon à baïonnette (15) loge une tige (65) qui dépasse en partie hors du manchon (15) lorsque la soupape de purge (1) est en position ouverte.
